# EUROPÄISCHE PATENTSCHRIFT

(11) **EP 2 421 722 B1**
(45) Veröffentlichungstag und Bekanntmachung des Hinweises auf die Patenterteilung: **01.03.2017**
(21) Anmeldenummer: 10713846.3
(22) Anmeldetag: 13.04.2010
(51) Int. Cl.: B60L 5/00, B60M 7/00

(54) **ANLAGE, UMFASSEND EIN PRIMÄRLEITERSYSTEM UND EIN FAHRZEUG**
ELECTRICAL INSTALLATION COMPRISING A FEEDER AND A VEHICLE
INSTALLATION COMPRENANT UN SYSTÈME DE CONDUCTEUR PRIMAIRE ET UN VÉHICULE

(30) Priorität: 24.04.2009 DE 102009018563
(43) Veröffentlichungstag der Anmeldung: 29.02.2012
(73) Patentinhaber: SEW-Eurodrive GmbH & Co, 76646 Bruchsal (DE)
(72) Erfinder: SCHNEIDER, Bernhard, 68794 Oberhausen-Rheinhausen (DE); MAHLEIN, Jochen, 76139 Karlsruhe (DE); SCHMIDT, Josef, 76676 Graben-Neudorf (DE)
(86) Internationale Anmeldenummer: PCT/EP2010/002251
(87) Internationale Veröffentlichungsnummer: WO 2010/121721

(56) Entgegenhaltungen:
- DE-A1-102005 053 111
- DE-A1-102007 024 293
- JP-A- 2000 190 759
- JP-U- 52 035 797

## Beschreibung

Die Erfindung betrifft eine Anlage, umfassend ein Primärleitersystem und ein Fahrzeug.

Induktiv versorgbare Fahrzeuge sind bekannt. Jedoch müssen diese Fahrzeuge dem Verlauf des Primärleiters folgen, da bei Abweichungen vom Bereich des Primärleiters die Energieaufnahme reduziert oder sogar unterbrochen ist. Somit ist eine Batterie notwendig, um eine Bewegung auf einer Fläche auszuführen.

**Aus der** DE 10 2005 053 111 A1 **ist als nächstliegender Stand der Technik eine Vorrichtung zur kontaktlosen Energieübertragung bekannt.**

Der Erfindung liegt daher die Aufgabe zugrunde, eine Anlage weiterzubilden, wobei eine Bewegung in der Fläche ohne Energiespeicher ausführbar sein soll.

Erfindungsgemäß wird die Aufgabe bei der nach den in Anspruch 1 angegebenen Merkmalen gelöst.

Wichtige Merkmale der Erfindung bei der Anlage sind, dass sie ein Primärleitersystem und ein Fahrzeug umfasst,
wobei das Fahrzeug eine Anordnung von Sekundärwicklungen umfasst, über die die Verbraucher des Fahrzeugs aus dem Primärleitersystem versorgbar sind, insbesondere wobei die von den Sekundärwicklungen der Anordnung aufgenommene Energieströme zusammengeführt werden und daraus die Verbraucher versorgt werden,
wobei die Anordnung von Sekundärwicklungen mit dem Primärleitersystem induktiv gekoppelt vorgesehen ist,
wobei
das Primärleitersystem eine mäanderförmig verlegte Stromschleife umfasst, so dass mit Ausnahme von Randbereichen, also Umlenkbereichen benachbarte Abschnitte des Primärleitersystems mit der Maschenbreite voneinander beabstandet sind und parallel zueinander verlaufen,
wobei die Anordnung zumindest zwei Paare von Sekundärwicklungen umfasst, deren innerhalb des jeweiligen Paares gedachten Verbindungslinien senkrecht zueinander ausgerichtet sind,
oder wobei die Anordnung zumindest drei Paare von Sekundärwicklungen umfasst, deren innerhalb des jeweiligen Paares gedachten Verbindungslinien um einen Winkelbetrag von 60° zueinander aufweisen.

Von Vorteil ist dabei, dass auch für ein solches Primärleitersystem mit Dreiecksgitterstruktur eine kontinuierliche Energieaufnahme erreichbar ist.

Bei einer vorteilhaften Ausgestaltung entspricht der Abstand, insbesondere der Abstand der Schwerpunkte oder Mittelpunkte, der Sekundärwicklungen eines jeweiligen Paares einem ungeradzahligen Vielfachen der halben Maschenbreite α, insbesondere wobei das ungeradzahlige Vielfache 3 oder größer ist. Von Vorteil ist dabei, dass stets eine Energieaufnahme stattfindet. Wenn nämlich der erste Übertragerkopf des Paares keine Energie aufnimmt, weil der Primärleiter außerhalb seines empfindlichen Bereichs ist, nimmt der andere Übertragerkopf Energie maximal auf, da der Primärleiter gerade dann in dessen empfindlichen Bereich liegt. Umgekehrtes gilt analog. Bei einer Verdrehung um 90° nehmen zwar beide Übertragerköpfe keine Energie auf, jedoch übernimmt dann das andere Paar die Energieaufnahme in analoger Weise.

Bei einer vorteilhaften Ausgestaltung fällt der Schwerpunkt oder Mittelpunkt des ersten Paares auf den entsprechenden Schwerpunkt oder Mittelpunkt des zweiten Paares oder die beiden Punkte sind voneinander näher als ein Viertel einer Maschenbreite α voneinander beabstandet. Von Vorteil ist dabei, dass auf eine möglichst kompakte Weise eine Anordnung von Übertragerköpfen vorsehbar ist.

Bei einer vorteilhaften Ausgestaltung ist der Schwerpunkt oder Mittelpunkt des ersten Paares von einem ersten Punkt beabstandet in Richtung der Verbindungslinie des ersten Paares mit einem Abstandswert, welcher ein ungeradzahliges Vielfaches von 1 / 2 * a * √2 beträgt, insbesondere wobei das ungerade Vielfache das Einfache, das Dreifache, das Fünffache beträgt,
der Schwerpunkt oder Mittelpunkt des zweiten Paares von dem ersten Punkt beabstandet ist in Richtung der Verbindungslinie des zweiten Paares mit einem Abstandswert, welcher ein ungeradzahliges Vielfaches von 1 / 2 * a * √2 beträgt, insbesondere wobei das ungerade Vielfache das Einfache, das Dreifache, das Fünffache beträgt,
insbesondere wobei der Abstandswert mit einer Genauigkeit von mehr als einem Viertel einer Maschenbreite α bestimmt ist. Von Vorteil ist dabei, dass je nach Einbauraum eine angepasste Anordnung von Übertragerköpfen vorsehbar ist, insbesondere ist auch jeder Übertragerkopf sehr groß ausführbar und mittels der Beabstandung trotzdem genügend viel Bauraum bereit stellbar.

Bei einer vorteilhaften Ausgestaltung ist der Schwerpunkt oder Mittelpunkt des ersten Paares vom entsprechenden Schwerpunkt oder Mittelpunkt des zweiten Paares beabstandet in Richtung einer Verbindungslinie mit einem Abstandswert, welcher ein ungeradzahliges Vielfaches von 1 / 2 * a * √2 beträgt, insbesondere wobei das ungerade Vielfache das Einfache, das Dreifache, das Fünffache beträgt,
insbesondere wobei der Abstandswert mit einer Genauigkeit von mehr als einem Viertel einer Maschenbreite α bestimmt ist. Von Vorteil ist dabei, dass wiederum sowohl bei paralleler und auch bei 45 ° geneigter Orientierung des Fahrzeugs eine Energieaufnahme erreichbar ist.

Bei einer vorteilhaften Ausgestaltung weist das Primärleitersystem mit Ausnahme der äußeren Randbereiche, also Umlenkbereiche, eine diskrete Translationssymmetrie oder diskrete Rotationssymmetrie aufweist. Von Vorteil ist dabei, dass die Anordnung der Übertragerköpfe auf die Symmetrie des Primärleitersystems anpassbar ist.

Bei einer vorteilhaften Ausgestaltung umfasst das Primärleitersystem zumindest eine weitere mäanderförmig verlegte Stromschleife, die im Wesentlichen gegenüber der ersten um einen Winkelbetrag verdreht angeordnet ist. Von Vorteil ist dabei, dass die Fertigung des Primärleitersystems in einfacher Weise erreichbar ist.

Bei einer vorteilhaften Ausgestaltung ist die Anzahl der mäanderförmig verlegten Stromschleifen n ist, wobei n eine ganze Zahl ist, die größer als 1 ist, und die Mäander um jeweils einen Winkelbetrag von 180° / n gegeneinander verdreht angeordnet sind. Von Vorteil ist dabei, dass ebenfalls die Fertigung des Primärleitersystems in einfacher Weise erreichbar ist.

Bei einer vorteilhaften Ausgestaltung weist die Maschenbreite α einen Wert zwischen 100 und 200mm auf, insbesondere zwischen 130 mm und 160mm, wobei die Frequenz des in das Primärleitersystem eingespeisten Wechselstromes zwischen 10 und 500 kHz beträgt, insbesondere zwischen 20 und 30 kHz. Von Vorteil ist dabei, dass bei diesen Parametern eine optimale Energieaufnahme erreichbar ist.

Bei einer vorteilhaften Ausgestaltung hat der jeweilige Übertragerkopf eine Ausdehnung in Richtung der Verbindungslinie, die zwischen einer halben und dem anderthalbfachen der Maschenbreite α beträgt, insbesondere im Wesentlichen einer Maschenbreite α entspricht. Von Vorteil ist dabei, dass der Übertragerkopf auch groß ausführbar ist und infolge der beschriebenen Beabstandungen eine optimale Leistungsübertragung in allen Orientierungen des Fahrzeuges in der Ebene erreichbar ist.

Weitere Vorteile ergeben sich aus den Unteransprüchen.

Die Erfindung wird nun anhand von Abbildungen näher erläutert:

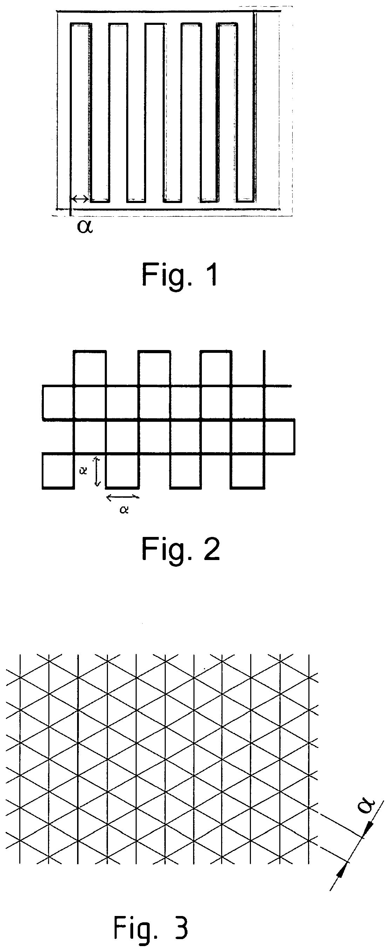

In der Figur 1 ist für eine erfindungsgemäße Vorrichtung ein Primärleitersystem schematisch dargestellt.

Hierbei wird in einen mäanderförmig verlegten Primärleiter ein mittelfrequenter Strom, insbesondere mit einer Frequenz zwischen 10 und 500 kHz eingeprägt. Das Primärleitersystem ist vorzugsweise in einem Boden eingelegt oder im Boden vergossen vorgesehen.

Die Maschenbreite beträgt α. Dies bedeutet, dass unter Vernachlässigung der Umlenkbereiche des Mäanders zwei nächstbenachbarte Abschnitte des Primärleiters den Abstand a zueinander aufweisen, also im Abstand a parallel zueinander verlaufen.

In der Figur 2 ist ein weiteres erfindungsgemäßes Primärleitersystem gezeigt. Hierbei ist ein weiteres gleichartiges mäanderförmiges Primärleitersystem vorgesehen, das um 90° verdreht angeordnet ist und über das erste Primärleitersystem nach Figur 1 gelegt ist. Auf diese Weise entsteht ein netzartiges Primärleitersystem mit quadratischen Zellen.

In der Figur 3 ist ein weiteres erfindungsgemäßes Primärleitersystem gezeigt. Hierbei sind zwei weitere gleichartige mäanderförmige Primärleitersysteme vorgesehen, die um jeweils 60° verdreht angeordnet sind und über das erste Primärleitersystem nach Figur 1 gelegt sind. Auf diese Weise entsteht ein netzartiges Primärleitersystem mit dreieckigen Zellen.

Im Folgenden wird vorzugsweise Bezug genommen auf das in Figur 1 gezeigte Primärleitersystem. Dieses ist im Wesentlichen, also mit Ausnahme des Randbereichs, gekennzeichnet durch eine diskrete Translationssymmetrie in einer einzigen Richtung.
Hierbei ist die Translationssymmetrie eindeutig beschrieben durch die Maschenbreite α, also den Abstand zweier benachbarter Primärleiterabschnitte.

Auf dem Boden oder oberhalb der Ebene der Primärleitersysteme sind bewegbar angeordnete Fahrzeuge vorgesehen, an die Energie berührungslos aus der Primärleitersystem-Anordnung übertragbar ist. Insbesondere das Antriebssystem des Fahrzeugs ist über somit versorgbar.

Hierzu weist das Fahrzeug Sekundärwicklungen in jeweiligen Übertragerköpfen, die auch als Pick-Up bezeichenbar sind, auf, die induktiv gekoppelt sind an die Primärleitersysteme.

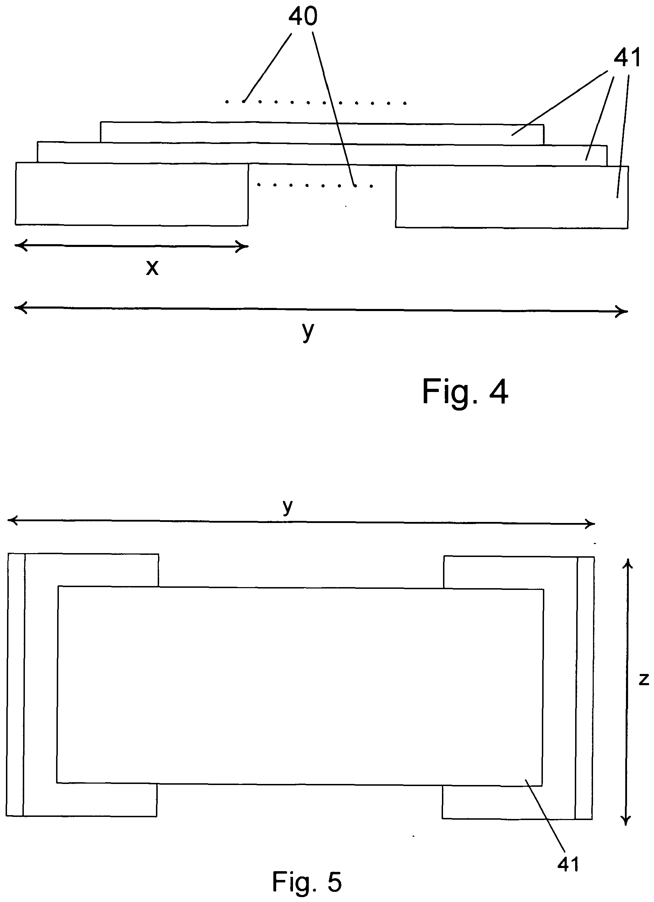

In Figur 4 ist ein solcher Übertragerkopf gezeigt. Dabei ist die Sekundärwicklung derart vorgesehen, dass ihre Wicklungsachse in der Zeichenebene liegt und derart um die U-förmig angeordneten Ferritplatten 41 gewickelt sind, dass die Schenkel des U zu einem nicht dargestellten Primärleiter hin geöffnet ausgerichtet sind, der in Normalenrichtung zur Zeichenebene ausgerichtet ist. Diese Normalenrichtung ist diejenige Richtung des Primärleiters, in welcher ein Maximum an Energie übertragbar ist. Diese optimale Richtung ist also senkrecht zur Wicklungsrichtung und senkrecht zur vom U aufgespannten Ebene.

Das vom Primärleiter erzeugte Magnetfeld ist von den Ferritplatten größtenteils auffangbar und führt somit zu einer Induktionsspannung an der Sekundärwicklung 40. Diese ist mit einer Kapazität derart in Reihe oder parallel verschaltet, dass die zugehörige Resonanzfrequenz im Wesentlichen der Frequenz des in den Primärleiter eingespeisten Wechselstromes entspricht. Diesem Resonanzkreis wird Energie entnommen, vorzugsweise durch einen Gleichrichter.

In Figur 5 ist eine zugehörige Draufsicht dargestellt.

In weiteren erfindungsgemäßen Ausführungsbeispielen ist statt der U-förmigen Ausführung eine E-förmige Ausführung vorteilhaft. In diesem Fall ist die optimale Richtung also senkrecht zur Wicklungsrichtung und senkrecht zur vom E aufgespannten Ebene.

In Figur 6 ist wiederum in Draufsicht die Anordnung von zwei Paaren von Übertragerköpfen gezeigt.

Dabei besteht das erste Paar aus einem ersten Übertragerkopf 61 und einem zweiten gleichartigen Übertragerkopf 61, der aus dem ersten durch gedachte Parallelverschiebung in der optimalen Richtung hervorgeht.

Als Abstand zwischen den Übertragerköpfen wird 5 * α / 2, also das Zweieinhalbfache der Maschenbreite α gewählt.

Das zweite Paar besteht aus einem ersten Übertragerkopf 60 und einem zweiten gleichartigen Übertragerkopf 60, der aus dem ersten durch gedachte Parallelverschiebung in der optimalen Richtung hervorgeht, wobei diese optimale Richtung senkrecht zur optimalen Richtung des ersten Paars liegt. Insbesondere ist dabei die aus beiden Richtungen aufgespannte Ebene parallel zum Boden ausgerichtet.

Als Abstand zwischen den Übertragerköpfen wird 3 * α / 2, also das Eineinhalbfache der Maschenbreite α gewählt.

Die angegebenen Abstände beziehen sich dabei auf die Mittelpunkte der Übertragerköpfe. Bei Ausführung der Übertragerköpfe mit einer Ausdehnung in optimaler Richtung mit dem Wert der Maschenbreite α beträgt der Abstand beim ersten Paar zwischen den Übertragerköpfen 3 * α / 2 und zwischen den Übertragerköpfen des zweiten Paares α / 2.

Der Schwerpunkt oder Mittelpunkt der Übertragerköpfe des ersten Paares ist am gleichen Ort wie der Schwerpunkt oder Mittelpunkt der Übertragerköpfe des zweiten Paares.

Der Abstand Übertragerköpfe eines Paares ist somit derart, dass bei zu einem ersten Übertragerkopf optimaler Lage des Primärleiters dieser eine maximale Energieaufnahme aufweist, währenddessen der andere Übertragerkopf nur eine minimale Energieaufnahme aufweist oder sogar gar keine Energieaufnahme durchführt. Bei Verschiebung des Paares senkrecht zum Primärleiter kehrt sich dieses Verhältnis zunehmend um, so dass sich die Energieaufnahme des zweiten Übertragerkopfes zunehmend verbessert und nach Erreichen eines Maximums der erste Übertragerkopf ein Minimum an Energieaufnahme erreicht.

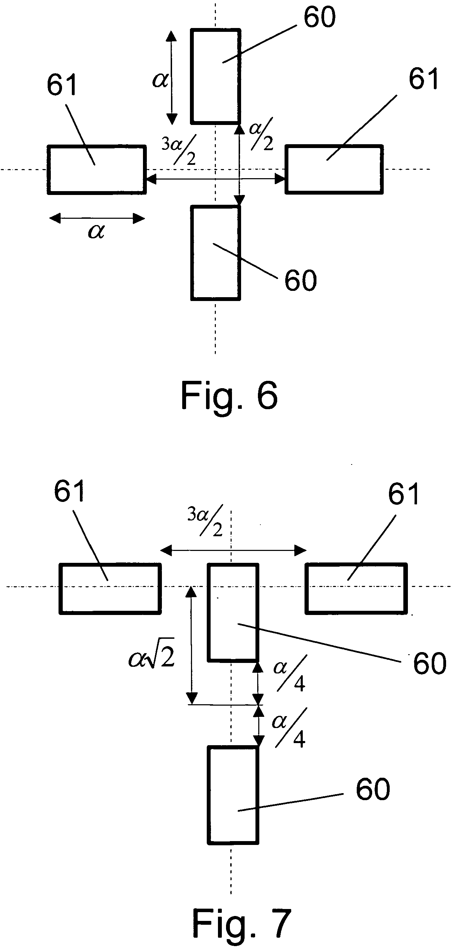

In der Figur 7 ist ein weiteres Ausführungsbeispiel gezeigt, bei dem das zweite Paar von Übertragungsköpfen gegenüber Figur 6 um α * √2 verschoben ist in der zugehörigen optimalen Richtung.

Somit ist bei einer schrägen Fahrt des Fahrzeuges samt seiner Übertragerköpfe (60, 61) im Winkel von etwa 45° von beiden Übertragerköpfen ungefähr gleich viel Energie aufnehmbar. Ist der Winkel kleiner als 45°, insbesondere etwa 0°, wird die Energie von demjenigen Paar von Übertragerköpfen geliefert, dessen zugehörige optimale Richtung parallel zu den Primärleitern verläuft. Nach Überschreiten von 45° wird die Energie vornehmlich vom anderen Paar an Übertragerköpfen geliefert. Bei etwa 90° wird die Energie nur noch vom diesem Paar aufgenommen.

Das zweite Paar ist also um α * √2 verschoben in zu seiner optimalen Richtung senkrechten Richtung. Somit ist wiederum bei einer Schräglage von 45° keine wesentliche Veränderung der Energieaufnahmen bewirkt.

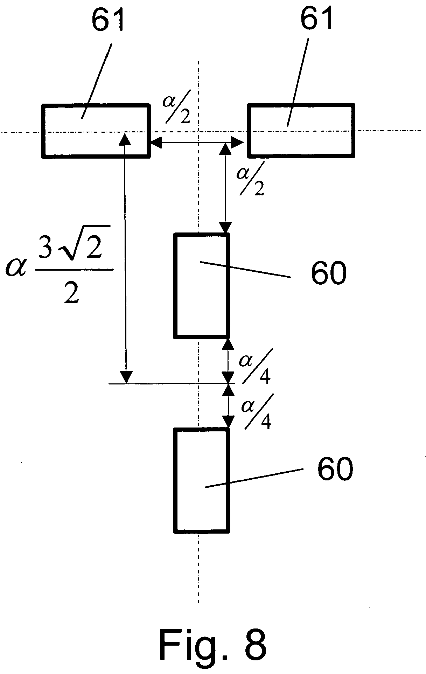

In der Figur 8 ist eine Verschiebung um 3 / 2 * α * √2 ausgeführt anstatt der für Figur 7 beschriebenen Verschiebung um α * √2. Dies entspricht bei einem Winkel von 45 °zwischen optimaler Richtung des Paares und Primärleiterrichtung einer Verschiebung um eine "Gitterkonstante", also um eine in der optimalen Richtung gemessene Periodenlänge.

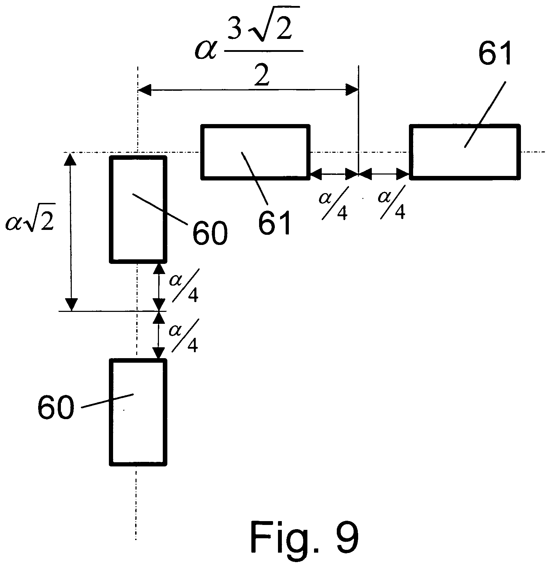

In der Figur 9 ist das Paar zusätzlich in zur bei Figur 8 genannten Verschiebung senkrechter Richtung verschoben um wiederum 3 / 2 * α * √2. Dies entspricht der in der zugehörigen Richtung gemessenen Periodenlänge.

Bei solchen Verschiebungen um eine Periodenlänge eines 45° zur optimalen Anordnung der Übertragerköpfe verdreht angeordneten Primärleitersystems bleibt die Aufteilung der Energieaufnahme auf die Übertragerköpfe gleich.

Auf diese Weise ist bei allen gezeigten Anordnungen eine sehr hohe Energieaufnahme realisierbar, wobei dies auch bei allen Orientierungen des Fahrzeuges auf der Bodenebene gilt.

Dabei werden die Ausgangsseiten der Gleichrichter aller Übertragerköpfe parallel geschaltet und somit die jeweiligen Energieströme addiert. Alternativ sind auch anders geartete Zusammenführungen der Energieströme realisierbar.

Verallgemeinert gesprochen, weist das Primärleitersystem eine Symmetrie auf, wie beispielsweise die genannte diskrete Translationssymmetrie. Alternativ ist auch eine diskrete Rotationssymmetrie wie bei Figur 2 und 3 verwendbar. Dabei ist die Zähligkeit der Symmetrie zwei bei Figur 2 und drei bei Figur 3.

Die Anordnung der Übertragerköpfe nach Figur 6 ist derart zusammengesetzt, dass sie aus einer ersten Teilanordnung, insbesondere Paar, besteht, das bei Verschiebung in Symmetrierichtung ein im Wesentlichen unverändertes Energieaufnahmeverhalten erreichbar macht, also der Abstand der beiden Übertragerköpfe der halben Maschenbreite α entspricht oder einem ungeradzahligen Vielfachen der halben Maschenbreite α, also dem Eineinhalbfachen, Zwei-einhalbfachen etc. der Maschenbreite α.

Das zweite Paar ist senkrecht zur Symmetrierichtung ausgerichtet und weist ebenfalls den genannten Abstand auf. Somit ist bei einer Drehung um 90° das gleiche EnergieaufnahmeVerhalten erreichbar.

Die Anordnung nach Figur 6 ist derart angeordnet, die Mittelpunkte der Paare übereinstimmen.

Die Anordnungen nach Figur 7, 8 und 9 unterscheiden sich dadurch, dass das zweite Paar und/oder erste verschoben ist um die Periodenlänge, welche bei einem Winkel von 45° Verdrehung zwischen Primärleitersystem und optimaler Richtung auftritt, wenn das Fahrzeug sich in der Richtung eines Paares bewegt.

### Bezugszeichenliste

- α: Maschenbreite

- 40: Sekundärwicklung
- 41: Ferritplatten
- 60: Sekundärwicklung
- 61: Sekundärwicklung

## Patentansprüche

1. Anlage, umfassend ein Primärleitersystem und ein Fahrzeug,
wobei das Fahrzeug eine Anordnung von Sekundärwicklungen (40, 60, 61) umfasst, über die die Verbraucher des Fahrzeugs aus dem Primärleitersystem versorgbar sind, insbesondere wobei die von den Sekundärwicklungen (40, 60, 61) der Anordnung aufgenommene Energieströme zusammengeführt werden und daraus die Verbraucher versorgt werden,
wobei die Anordnung von Sekundärwicklungen (40, 60, 61) mit dem Primärleitersystem induktiv gekoppelt vorgesehen ist,
**dadurch gekennzeichnet, dass**
das Primärleitersystem eine mäanderförmig verlegte Stromschleife umfasst, so dass mit Ausnahme von Randbereichen, also Umlenkbereichen benachbarte Abschnitte des Primärleitersystems mit der Maschenbreite α voneinander beabstandet sind und parallel zueinander verlaufen,
wobei die Anordnung zumindest zwei Paare von Sekundärwicklungen (40, 60, 61) umfasst, deren innerhalb des jeweiligen Paares gedachten Verbindungslinien **entlang einer Längsachse der jeweiligen paarweise angeordneten Sekundärwicklungen (40, 60, 61)** senkrecht zueinander ausgerichtet sind,
oder wobei die Anordnung zumindest drei Paare von Sekundärwicklungen (40, 60, 61) umfasst, deren innerhalb des jeweiligen Paares gedachten Verbindungslinien um einen Winkelbetrag von 60° zueinander aufweisen.

2. Anlage nach mindestens einem der vorangegangenen Ansprüche,
**dadurch gekennzeichnet, dass**
der Abstand, insbesondere der Abstand der Schwerpunkte oder Mittelpunkte, der Sekundärwicklungen (40, 60, 61) eines jeweiligen Paares einem ungeradzahligen Vielfachen der halben Maschenbreite α entspricht, insbesondere wobei das ungeradzahlige Vielfache 3 oder größer ist.

3. Anlage nach mindestens einem der vorangegangenen Ansprüche,
**dadurch gekennzeichnet, dass**
der Schwerpunkt oder Mittelpunkt des ersten Paares auf den entsprechenden Schwerpunkt oder Mittelpunkt des zweiten Paares fällt oder zumindest die beiden Punkte voneinander näher als ein Viertel einer Maschenbreite α voneinander beabstandet sind.

4. Anlage nach mindestens einem der vorangegangenen Ansprüche,
**dadurch gekennzeichnet, dass**
der Schwerpunkt oder Mittelpunkt des ersten Paares von einem ersten Punkt beabstandet ist in Richtung der Verbindungslinie des ersten Paares mit einem Abstandswert, welcher ein ungeradzahliges Vielfaches von 1 / 2 * α * √2 beträgt, insbesondere wobei das ungerade Vielfache das Einfache, das Dreifache, das Fünffache beträgt,
der Schwerpunkt oder Mittelpunkt des zweiten Paares von dem ersten Punkt beabstandet ist in Richtung der Verbindungslinie des zweiten Paares mit einem Abstandswert, welcher ein ungeradzahliges Vielfaches von 1 / 2 * α * √12 beträgt, insbesondere wobei das ungerade Vielfache das Einfache, das Dreifache, das Fünffache beträgt,
insbesondere wobei der Abstandswert mit einer Genauigkeit von mehr als einem Viertel einer Maschenbreite α bestimmt ist.

5. Anlage nach mindestens einem der vorangegangenen Ansprüche,
**dadurch gekennzeichnet, dass**
der Schwerpunkt oder Mittelpunkt des ersten Paares vom entsprechenden Schwerpunkt oder Mittelpunkt des zweiten Paares beabstandet ist in Richtung einer Verbindungslinie mit einem Abstandswert, welcher ein ungeradzahliges Vielfaches von 1 / 2 * α * √2 beträgt, insbesondere wobei das ungerade Vielfache das Einfache, das Dreifache, das Fünffache beträgt,
insbesondere wobei der Abstandswert mit einer Genauigkeit von mehr als einem Viertel einer Maschenbreite α bestimmt ist.

6. Anlage nach mindestens einem der vorangegangenen Ansprüche,
**dadurch gekennzeichnet, dass**
das Primärleitersystem mit Ausnahme der äußeren Randbereiche, also Umlenkbereiche, eine diskrete Translationssymmetrie oder diskrete Rotationssymmetrie aufweist.

7. Anlage nach mindestens einem der vorangegangenen Ansprüche,
**dadurch gekennzeichnet, dass**
das Primärleitersystem zumindest eine weitere mäanderförmig verlegte Stromschleife umfasst, die im Wesentlichen gegenüber der ersten um einen Winkelbetrag verdreht angeordnet ist.

8. Anlage nach mindestens einem der vorangegangenen Ansprüche,
**dadurch gekennzeichnet, dass**
die Anzahl der mäanderförmig verlegten Stromschleifen n ist, wobei n eine ganze Zahl ist, die größer als 1 ist, und die Mäander um jeweils einen Winkelbetrag von 180° / n gegeneinander verdreht angeordnet sind.

9. Anlage nach mindestens einem der vorangegangenen Ansprüche,
**dadurch gekennzeichnet, dass**
die Maschenbreite α einen Wert zwischen 100 und 200mm aufweist, insbesondere zwischen 130 mm und 160mm, wobei die Frequenz des in das Primärleitersystem eingespeisten Wechselstromes zwischen 10 und 500 kHz beträgt, insbesondere zwischen 20 und 30 kHz.

10. Anlage nach mindestens einem der vorangegangenen Ansprüche,
**dadurch gekennzeichnet, dass**
der jeweilige Übertragerkopf eine Ausdehnung in Richtung der Verbindungslinie hat, die zwischen einer halben und dem anderthalbfachen der Maschenbreite α beträgt, insbesondere im Wesentlichen einer Maschenbreite α entspricht.

## Claims

1. System, comprising a primary conductor system and a vehicle,
wherein the vehicle comprises an arrangement of secondary windings (40, 60, 61), via which the loads of the vehicle are suppliable from the primary conductor system, in particular wherein the energy flows picked up by the secondary windings (40, 60, 61) of the arrangement are combined and the loads are supplied therefrom,
wherein the arrangement of secondary windings (40, 60, 61) is provided inductively coupled to the primary conductor system,
**characterised in that**
the primary conductor system comprises a current loop laid in a meander shape, so that except for the edge regions, that is to say diverting regions, adjacent sections of the primary conductor system are spaced at a mesh width α from one another and run parallel to one another,
wherein the arrangement comprises at least two pairs of secondary windings (40, 60, 61), the imaginary connecting lines of which within the respective pair are oriented perpendicular to one another along a longitudinal axis of the respective secondary windings (40, 60, 61) arranged in pairs,
or wherein the arrangement comprises at least three pairs of secondary windings (40, 60, 61), the imaginary connecting lines of which within the respective pair are at an angle of 60° to one another.

2. System according to at least one of the preceding claims, **characterised in that**
the spacing, in particular the spacing of the centres of gravity or centre points, of the secondary windings (40, 60, 61) of a respective pair corresponds to an odd multiple of half the mesh width α, in particular wherein the odd multiple is 3 or greater.

3. System according to at least one of the preceding claims, **characterised in that**
the centre of gravity or centre point of the first pair falls on the corresponding centre of gravity or centre point of the second pair or at least the two points are spaced from one another closer than a quarter of a mesh width α from one another.

4. System according to at least one of the preceding claims, **characterised in that**
the centre of gravity or centre point of the first pair is spaced from a first point in the direction of the connecting line of the first pair at a distance value which is an odd multiple of 1/2*α*√2, in particular wherein the odd multiple is once, three times, five times,
the centre of gravity or centre point of the second pair is spaced from the first point in the direction of the connecting line of the second pair at a distance value which is an odd multiple of 1/2*α*√2, in particular wherein the odd multiple is once, three times, five times,
in particular wherein the distance value is determined with an accuracy of more than a quarter of a mesh width α.

5. System according to at least one of the preceding claims, **characterised in that**
the centre of gravity or centre point of the first pair is spaced from the corresponding centre of gravity or centre point of the second pair in the direction of a connecting line at a distance value which is an odd multiple of 1/2*α*√2, in particular wherein the odd multiple is once, three times, five times,
in particular wherein the distance value is determined with an accuracy of more than a quarter of a mesh width α.

6. System according to at least one of the preceding claims, **characterised in that**
the primary conductor system except for the outer edge regions, that is to say diverting regions, has a discrete translational symmetry or discrete rotational symmetry.

7. System according to at least one of the preceding claims, **characterised in that**
the primary conductor system comprises at least one further current loop laid in a meander shape, which is arranged rotated substantially with respect to the first by an angular amount.

8. System according to at least one of the preceding claims, **characterised in that**
the number of current loops laid in a meander shape is n, wherein n is an integer which is greater than 1, and the meanders are arranged rotated with respect to one another by in each case an angular amount of 180°/n.

9. System according to at least one of the preceding claims, **characterised in that**
the mesh width α has a value between 100 and 200 mm, in particular between 130 mm and 160 mm, wherein the frequency of the alternating current fed into the primary conductor system is between 10 and 500 kHz, in particular between 20 and
30 kHz.

10. System according to at least one of the preceding claims, **characterised in that**
the respective pickup has an extent in the direction of the connecting line which is between half and one and a half times the mesh width α, in particular corresponds substantially to a mesh width α.

## Revendications

1. Installation comprenant un système à conducteur primaire et un véhicule, le véhicule incluant un ensemble d'enroulements secondaires (40, 60, 61) par l'intermédiaire duquel les appareils consommateurs dudit véhicule peuvent être alimentés à partir dudit système à conducteur primaire, sachant notamment que les flux d'énergie absorbés par les enroulements secondaires (40, 60, 61) dudit ensemble sont regroupés et sont à la base de l'alimentation desdits appareils consommateurs,
sachant qu'il est prévu un couplage inductif dudit ensemble d'enroulements secondaires (40, 60, 61) avec ledit système à conducteur primaire,
**caractérisée par le fait que**
le système à conducteur primaire comprend une boucle de courant agencée en forme de méandres, de sorte que, à l'exception de régions marginales, c'est-à-dire de zones de déviation, des tronçons adjacents dudit système à conducteur primaire sont espacés les uns des autres de la largeur de maillage α, et s'étendent parallèlement les uns aux autres, sachant que ledit ensemble compte au moins deux paires d'enroulements secondaires (40, 60, 61) dont les lignes de jonction, virtuelles à l'intérieur de la paire considérée, sont orientées avec perpendicularité réciproque le long d'un axe longitudinal des enroulements secondaires (40, 60, 61) respectifs, disposés par paires,
ou sachant que ledit ensemble compte au moins trois paires d'enroulements secondaires (40, 60, 61) dont les lignes de jonction, virtuelles à l'intérieur de la paire considérée, décrivent mutuellement des angles mesurant 60°.

2. Installation selon au moins la revendication 1,
**caractérisée par le fait que**
l'espacement, en particulier la distance séparant les centres de gravité ou les points centraux des enroulements secondaires (40, 60, 61) d'une paire considérée, correspond à un multiple impair de la moitié de la largeur de maillage α, ledit multiple impair étant notamment de 3 ou plus.

3. Installation selon au moins l'une des revendications précédentes, **caractérisée par le fait que**
le centre de gravité ou le point central de la première paire coïncide avec le centre de gravité ou le point central correspondant de la seconde paire, ou bien les deux points sont, pour le moins, espacés l'un de l'autre d'une valeur inférieure à un quart d'une largeur de maillage α.

4. Installation selon au moins l'une des revendications précédentes, **caractérisée par le fait que**
le centre de gravité ou le point central de la première paire est espacé d'avec un premier point, en direction de la ligne de jonction de ladite première paire, d'une valeur d'espacement constituée d'un multiple impair de 1/2 * α * √2, ledit multiple impair représentant notamment la valeur simple, le triple, le quintuple,
le centre de gravité ou le point central de la seconde paire est espacé d'avec ledit premier point, en direction de la ligne de jonction de ladite seconde paire, d'une valeur d'espacement constituée d'un multiple impair de 1/2 * α * √2, ledit multiple impair représentant notamment la valeur simple, le triple, le quintuple,
sachant notamment que ladite valeur d'espacement est déterminée avec une précision de plus d'un quart d'une largeur de maillage α.

5. Installation selon au moins l'une des revendications précédentes, **caractérisée par le fait que**
le centre de gravité ou le point central de la première paire est espacé d'avec le centre de gravité ou le point central correspondant de la seconde paire, en direction d'une ligne de jonction, d'une valeur d'espacement constituée d'un multiple impair de 1/2 * α * √2,
ledit multiple impair représentant notamment la valeur simple, le triple, le quintuple, sachant notamment que ladite valeur d'espacement est déterminée avec une précision de plus d'un quart d'une largeur de maillage α.

6. Installation selon au moins l'une des revendications précédentes, **caractérisée par le fait que**
le système à conducteur primaire présente une symétrie de translation discrète ou une symétrie de rotation discrète à l'exception des régions marginales extérieures, c'est-à-dire de zones de déviation.

7. Installation selon au moins l'une des revendications précédentes, **caractérisée par le fait que**
le système à conducteur primaire inclut au moins une boucle additionnelle de courant agencée en forme de méandres et occupant, pour l'essentiel, un emplacement décalé d'une valeur angulaire par rapport à la première boucle.

8. Installation selon au moins l'une des revendications précédentes, **caractérisée par le fait que**
le nombre des boucles de courant agencées en forme de méandres est n, n étant un nombre entier supérieur à 1, et les méandres étant respectivement décalés les uns des autres d'une valeur angulaire de 180° / n.

9. Installation selon au moins l'une des revendications précédentes, **caractérisée par le fait que**
la largeur de maillage α présente une valeur comprise entre 100 et 200 mm, en particulier entre 130 mm et 160 mm, la fréquence du courant alternatif injecté dans le système à conducteur primaire mesurant entre 10 et 500 kHz, en particulier entre 20 et 30 kHz.

10. Installation selon au moins l'une des revendications précédentes, **caractérisée par le fait que**
la tête de transmission considérée présente, dans la direction de la ligne de jonction, une étendue qui mesure entre la moitié de la largeur de maillage α et une fois et demie cette dernière
et qui correspond notamment, pour l'essentiel, à une largeur de maillage α.
